(19) Europäisches Patentamt
European Patent Office
Office européen des brevets

(11) **EP 4 113 078 A1**

(12) **EUROPEAN PATENT APPLICATION**

(43) Date of publication:
**04.01.2023 Bulletin 2023/01**

(21) Application number: **21182948.6**

(22) Date of filing: **30.06.2021**

(51) International Patent Classification (IPC):
**G01J 1/04** (2006.01)     **G01J 1/42** (2006.01)
**G01M 11/02** (2006.01)

(52) Cooperative Patent Classification (CPC):
**G01J 1/4228; G01J 1/0403;** G01J 2001/4247

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Marelli Automotive Lighting Italy S.p.A.
Con Socio
Unico
10078 Venaria Reale (TO) (IT)**

(72) Inventors:
• **PARONI, Sara**
  **33028 Tolmezzo (UD) (IT)**
• **SVETTINI, Marco**
  **33028 Tolmezzo (UD) (IT)**
• **CANDOTTI, Pierluigi**
  **33028 Tolmezzo (UD) (IT)**

(74) Representative: **Zamprogno, Bruno et al
STUDIO TORTA S.p.A.
Via Viotti, 9
10121 Torino (IT)**

(54) **SYSTEM AND METHOD FOR THE PHOTOMETRIC CONTROL OF AN EMITTING SURFACE OF AN AUTOMOTIVE LIGHTING UNIT**

(57)     A system for the photometric control of an emitting surface (7) of an automotive lighting unit (2) comprising:
an image acquisition device (8) and an electronic unit (10).

The electronic unit (10) is configured so as to: selectively capture, by means of the image acquisition device (8), a plurality of digital image cells (ICi) comprising respective pixels ($P_{jk}(i)$), determine the overall image (IT) based on the captured digital cells (Ici), and determine the light intensity of the emitting surface (7) based on the luminance of the pixels ($L(P_{jk}(i))$) of the overall image (IT).

FIG. 1

EP 4 113 078 A1

**Description**

TECHNICAL FIELD

The invention relates to a system and a method for the photometric control of an emitting surface of an automotive lighting unit. More in detail, the invention relates to the determination of the light intensity of the emitting surface of an automotive lighting unit.

BACKGROUND ART

As it is known, the processes used for the production of motor vehicle lights, hereinafter referred to as automotive lighting units, involve the photometric control of the light intensity of the emitting surface of the automotive lighting unit.

This operation is currently carried out by means of spot checks using lab tools or by having an operator carrying out the control directly observe the automotive lighting unit that has been turned on.

Both photometric control modes mentioned above are affected by technical problems. The spot check with lab tools is subject to the exclusion of a significant number of automotive lighting units from the check, namely it is likely not to identify the automotive lighting units that were not spot-checked, which can have an intensity that does not comply with the specific requests of automotive manufacturers, with all consequent drawbacks.

The direct control carried out by operators, on the other hand, can be subject to wrong analyses, since it is basically determined by the result of a personal assessment, which directly depends on the automotive lighting unit observation ability and on the knowledge of operators.

DESCRIPTION OF THE INVENTION

Therefore, the object of the invention is to provide a system and a method for the photometric control of an emitting surface of an automotive lighting unit, which overcome the technical drawbacks described above.

This object is reached by the invention for it relates to a system for the photometric control of an emitting surface of an automotive lighting unit, the system comprises: an image acquisition device, an electronic unit configured so as to: selectively capture, by means of said image acquisition device, a plurality of digital image cells comprising respective pixels, wherein said captured digital cells are sized so that the pixels contained in them have an acquisition angle that is smaller than a predetermined angular threshold measured relative a vision axis of said image acquisition device, and wherein said digital cells are sized so that their composition/joining forms an overall image that represents said emitting surface, determine said overall image based on the captured digital cells, determine the light intensity of the emitting surface based on the luminance of the pixels of said overall image.

This object is further reached by the invention for it relates to a method for the photometric control of an emitting surface of an automotive lighting unit, wherein the method comprises: providing an image acquisition device, selectively capturing, by means of said image acquisition device, a plurality of digital image cells comprising respective pixels, wherein said captured digital cells are sized so that the pixels contained in them have an acquisition angle that is smaller than a predetermined angular threshold measured relative a vision axis of said image acquisition device, and wherein said digital cells are sized so that their composition/joining forms an overall image that represents said emitting surface, determining said overall image based on the captured digital cells, determining the light intensity of said emitting surface based on the luminance of the pixels of said overall image.

The independent and dependent claims describe preferred embodiments of the invention and form an integral part of the description.

BRIEF DESCRIPTION OF THE DRAWINGS

The invention will now be described with reference to the accompanying drawings, showing a non-limiting embodiment thereof, wherein:

Figure 1 schematically shows a system for the photometric control of an emitting surface of an automotive lighting unit according to the invention,
Figure 2 schematically shows a plurality of images, one of them being enlarged for greater clarity, which are acquired by the system during the photometric control of the emitting surface of the automotive lighting unit according to the invention,
Figure 3 is a schematic view of the system shown in Figure 1 during a movement of an image acquisition device,
Figure 4 is a diagram showing a curve of the luminance of the pixels of the image cells making up the overall image of the emitting surface of an automotive lighting unit,
Figure 5 is a perspective view, with sectional parts and parts removed for greater clarity, of an example of an automotive lighting unit provided with an emitting surface,
Figure 6 schematically shows a light moving system and a removal station comprised in the system according to the invention,
Figure 7 is a flow diagram of the operations implemented by the method for the photometric control of an emitting surface of an automotive lighting unit according to the invention,
Figures 8 and 9 show corresponding schematic views of the digital cell acquisition operation carried out while implementing the method according to the invention,

Figures 10 to 12 show corresponding schematic views of the luminance of a digital cell and of the relative angular thresholds.

## BEST MODE FOR CARRYING OUT THE INVENTION

The invention will now be described in detail with reference to the accompanying figures, so as to allow a person skilled in the art to carry it out and use it. Possible changes to the embodiments described herein will be immediately evident to skilled people and the generic principles described herein can be applied to other embodiments and applications without for this reason going beyond the scope of protection of the invention as it is defined in the appended claims. Therefore, the invention cannot be considered as limited to the embodiments described and shown herein, but it has to be associated with the widest scope of protection possible in accordance with the principles and the features described and claimed herein.

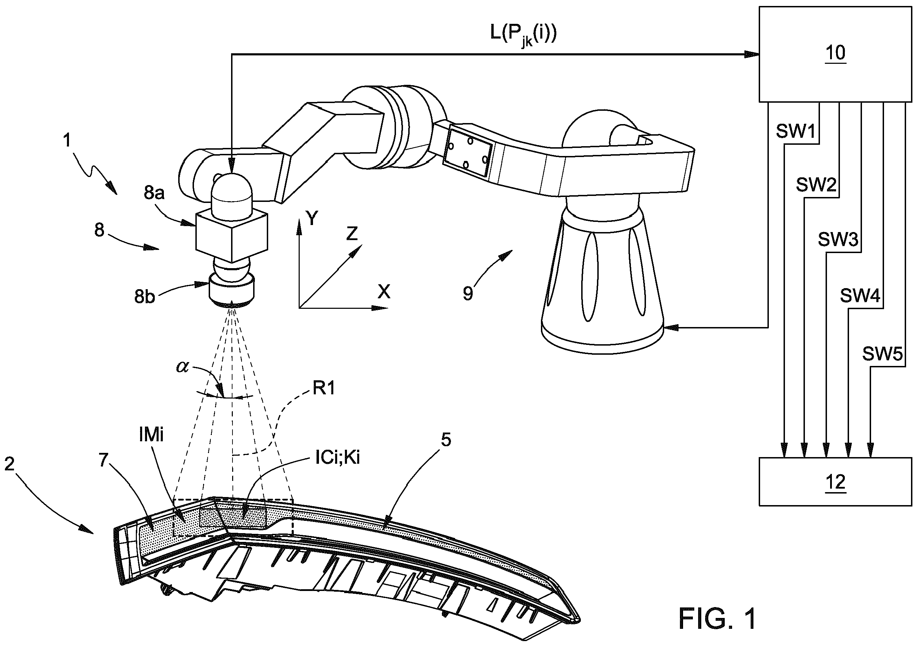

With reference to Figure 1, number 1 schematically shows, as a whole, a system for the photometric control of a lighting surface or emitting surface 7 of an automotive lighting unit 2.

According to a preferred embodiment of the invention, the system 1 implements a photometric control of the luminance of the emitting surface 7 of the automotive lighting unit 2.

According to a preferred embodiment of the invention, the automotive lighting unit 2 may be, for example, a tail rear light of the motor vehicle. However, the invention is not limited to a rear light of a motor vehicle (car, truck, bus or the like), but it can be applied, in addition or alternatively, to a front head light.

Furthermore, it should be pointed out that, in the description below, the term "automotive lighting unit 2" means a lighting device/apparatus, which is designed to be included in a vehicle, at the front or at the rear thereof, and is designed to carry out one or more of the following functions: lighting the area surrounding the motor vehicle, signalling the presence, signalling the position, signalling the moving direction of the motor vehicle.

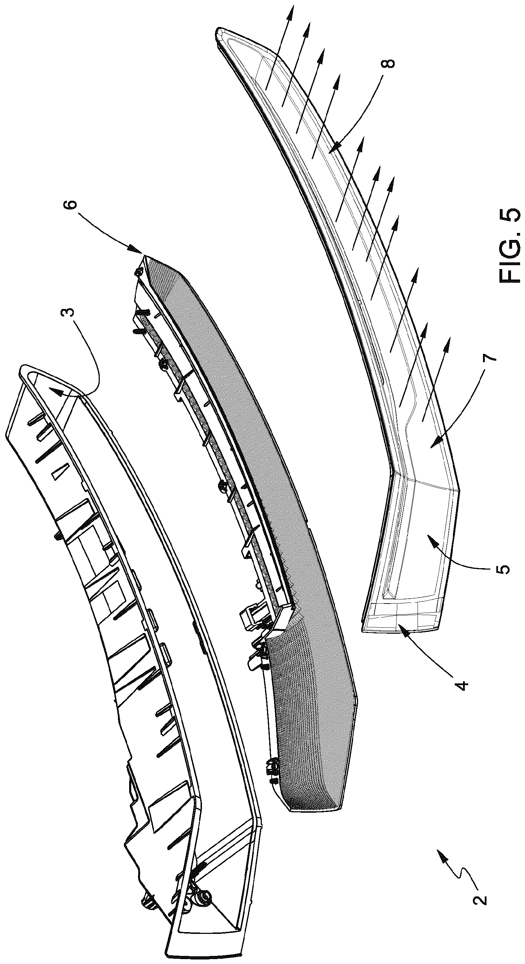

With reference to a possible explanatory embodiment shown in Figure 5, the automotive lighting unit 2 may comprise at least: a substantially cup-shaped rear casing 3, which is structured so as to be firmly enclosed in a compartment especially obtained in the body (for example in the rear or front part) of the vehicle (not shown); a front half-shell 4, which closes the mouth of the rear casing 3 so as to project, preferably on the outside of the body of the vehicle, and is provided with at least one transparent or semitransparent portion 5; and at least a lighting assembly or device 6 (an electronic circuit provided with light sources, for example LEDs or OLEDs or the like), which is arranged inside the rear casing 3 and is designed to generate light so as to backlight the transparent or semitransparent portion 5 of the front half-shell 4.

In the schematic example shown in Figures 1, 2, 3 and 5, the transparent or semitransparent portion 5 comprises and approximately lenticular body having at least a first predetermined area AR1. The transparent or semitransparent portion 5 has an inner surface (not shown), which is lighted (backlighted) by the light generated by the lighting device 6, and an outer surface opposite the inner surface, which constitutes/forms, in use (namely, when the lighting device 6 is turned on and emits light), the aforesaid lighting surface or emitting surface 7.

In the description below, the term "emitting surface 7" identifies a lighting surface of the automotive lighting unit 2, namely a surface designed to emit light towards (light) the space on the outside of the motor vehicle (Figure 5).

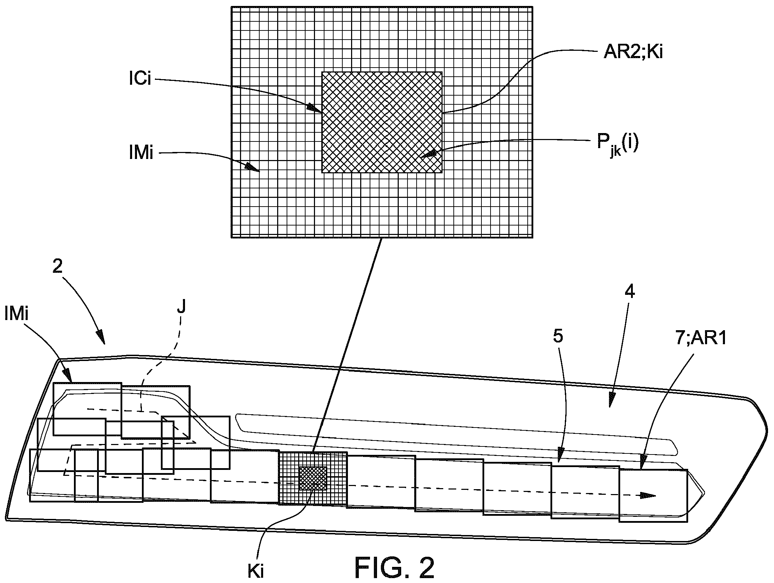

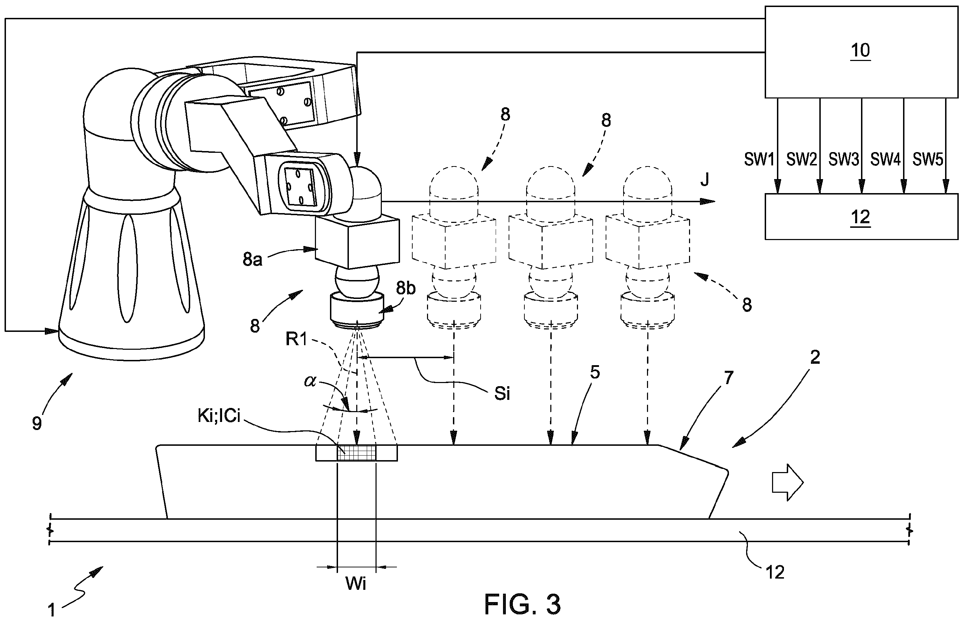

According to the preferred embodiment shown in Figures 1 and 3, the system 1 comprises an image acquisition device 8 and an electronic unit 10. According to a preferred embodiment shown in Figures 1 and 2, system 1 further preferably comprises a moving device 9.

According to the explanatory embodiment shown in Figures 1 and 3, the moving device 9 can comprise, for example, a robotic arm, which is mechanically connected to the image acquisition device 8 in order to move it. The robotic arm can comprise an electronic system or circuit (not shown), which receives, as an input, electrical control signals indicative of a requested movement (to be carried out) and causes the robotic arm to move in order to move the image acquisition device 8 in the space based on the received control signals. The movement made by the robotic arm can be controlled relative to one or more axes. In the example shown in Figure 1, the movement of the robotic arm can be controlled along/relative to the three axes X, Y and Z shown in figure 1, which are orthogonal to one another (multi-axis movement).

However, the invention is not limited to a system 1 comprising a moving device 9 provided with a robotic arm, but it can comprise any known mechanical moving system which is capable of moving the image control device 8 based on electrical control data/signals.

Furthermore, the invention is not limited to the use of a moving device 9 that moves, in a controlled manner, the image acquisition device 8 relative to the automotive lighting unit 2 (which, for example, stands still), but it can comprise, alternatively or in addition, a moving device 9 that moves the automotive lighting unit 2 relative to the image acquisition device 8 (which, for example, stands still) relative to one or more axes (X, Y and Z).

With reference to Figures 1, 2, 3 and 8, the image acquisition device 8 is configured so as to selectively acquire and/or capture at least one image IMi of the emitting surface 7 (wherein i is an index, hereinafter indicated as ranging from 1 to N). The image IMi is captured/processed in a digital format (for example by means of an electronic image sensor not shown herein, of the matrix or linear type or the like, comprised in the image acquisition device 8) and comprises a plurality of pixels.

As shown in Figures 1, 3 and 8, the image IMi contains at least one cell ICi, which represents, in the form of image, a relative portion Ki of the emitting surface 7. The portion Ki of the emitting surface 7 represented by the image cell ICi (digital image) is sized so as to have a second area AR2, which is smaller than the first area AR1 of the entire emitting surface 7.

According to Figures 2, 8, 10-12, the cell ICi is sized so that its pixels $P_{jk}$ (i) (wherein j and k are the indexes of the pixel matrix of the cell Ici) have respective acquisition angles $\delta jk$, measured relative to an observation/vision axis R1 of the image acquisition device 8, which are smaller than a predetermined angular threshold. In other words, the cell ICi consists of the digital image of part of the emitting surface 7 consisting of the portion Ki and is formed by the pixels $P_{jk}$(i) of the image IMi having acquisition angles $\delta jk$ that are smaller than the predetermined angular threshold $\alpha$.

The image acquisition device 8 is configured so as to acquire the image IMi and provide the cell ICi (digital image) of the acquired image IMi.

According to a convenient embodiment shown in Figures 1 and 3, the image acquisition device 8 can comprise a digital camera 8a (camera or video camera) and, preferably, a photopic filter 8b. The photopic filter 8b can be optically coupled to the optical assembly (lens) of the digital camera 8a. Preferably, the digital camera 8a can conveniently be monochromatic (black and white/greyscale) or a colour camera.

The camera 8a can be configured to implement calculation algorithms, which process the image IMi of the image sensor in order to provide, as an output, electrical data/signals containing the cell ICi (digital image). To this aim, the digital camera 8a can comprise an electronic processing device, for example a circuit provided with at least one microprocessor, which is configured to process the image IMi acquired by the sensor in order to provide, as an output, the cell ICi (digital image).

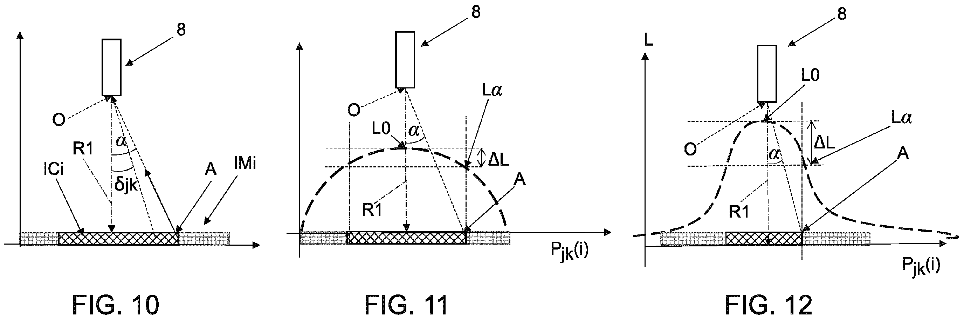

Figure 10 schematically shows a cell ICi contained in the image IMi acquired by the camera 8a, wherein R1 represents the observation or vision axis preferably corresponding to the optical axis of the camera 8a of the image acquisition device 8, $\delta jk$ is the acquisition angle of a pixel $P_{jk}$(i) measured relative to the optical axis R1, "A" is a point associated with the peripheral pixel $P_{jk}$(i) of the cell ICi observed from the point "O" of the image acquisition device 8 and having an acquisition angle $\delta jk$ (relative to the axis R1) corresponding to the predetermined angular threshold $\alpha$ ($\delta jk = \alpha$).

A change in the angular threshold $\alpha$ obviously leads to a corresponding adjustment of the two dimensions of the cell ICi. Therefore, the angular threshold $\alpha$ can be defined and/or changed based on some technical elements characterizing the emitting surface 7, such as for example its shape and/or the geometric distribution of its luminance relative to the observation axis, optical axis R1 in Figure 10. The predetermined angular thresh-

old $\alpha$, which defines the dimensions of the cell ICi, can be determined, in addition and/or alternatively, based on a percentage error $\in$ indicative of a tolerance to be taken into account in the assessment (measure) of the luminance L relative to the observation axis R1 of the image acquisition device 8.

Figures 11 and 12 show two schematic examples of the luminance observed/detected by the image acquisition device in two different lighting surface 7, wherein the angular thresholds $\alpha$ are different.

For example, the angular threshold $\alpha$ can be defined (for example, during the system setting step) based on the following equation:

a)

$$\delta jk \leq \propto \quad \left| \frac{\Delta L}{L0} = \frac{|L(\alpha) - L0|}{L0} <= \in \right.$$

Wherein:

$\delta jk$ indicates the angle of observation of the pixel Pjk defining the cell ICi by the image acquisition device 8,
$L(\alpha)$ is the luminance of the pixel $P_{jk}$(i) of the cell ICi intersecting the direction OA (Figures 10-12),
L0 is the luminance of the pixel $P_{jk}$(i) of the cell ICi intersecting the direction OH (Figures 10-12),
$\in$ is the percentage error indicative of the tolerance in the assessment (determination) of the luminance $L(\alpha)$ of the pixels of the cell ICi relative to the observation axis R1.

Equation a) indicates that it is possible to establish a percentage error $\in$ based on a tolerance and to calculate, depending on the latter, the predetermined angular threshold $\alpha$, thus defining, by so doing, the dimensions of the cells ICi captured by the system 1.

Obviously, the invention is not limited to the use of a camera 8a with a photopic filter 8b, but it can involve the use of other electronic devices.

For example, according to an embodiment, the image acquisition device 8 can alternatively comprise a luminance camera or a luminance metre or a goniophotometre or any other similar image acquisition device, which is configured to as to measure the luminance $L(P_{jk}$(i)) of the pixels $P_{jk}$(i) through the processing of the acquired image of the cell ICi. In this case, the luminance camera or the luminance metre or the goniophotometre can be configured so as to be provided with electronic devices, which process the digital image in order to: acquire the image IMi, obtain the cell ICi from the image IMi, determine/measure the luminance $L(P_{jk}$(i)) of the pixels $P_{jk}$(i) of the cell ICi, and provide the electronic unit 10 with the luminance $L(P_{jk}$(i)) of the pixels of the cell ICi. The operation of a luminance camera and/or of a luminance metre and/or of a goniophotometre to determine the luminance of the pixels of a digital image of a surface are known and, as a consequence, will not be described any further.

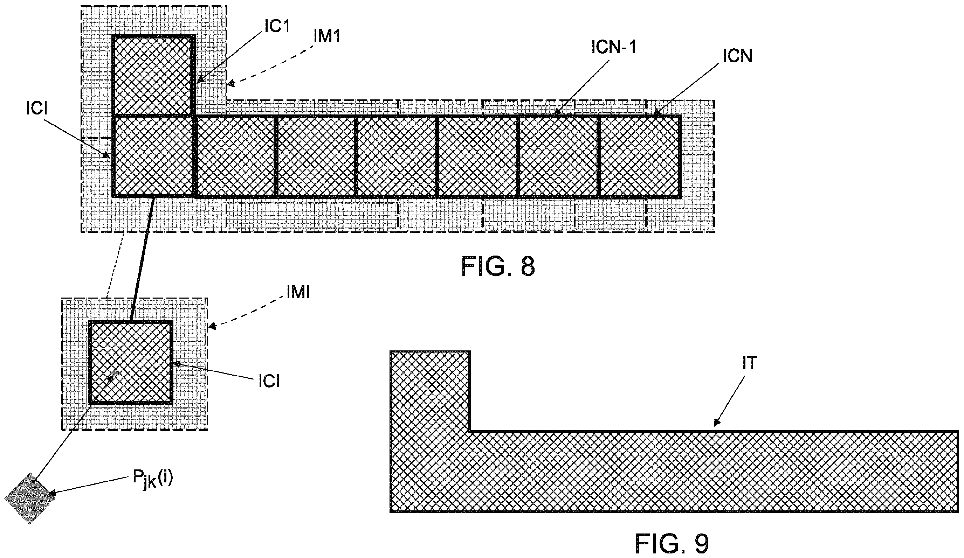

With reference to the embodiment shown in Figures 1, 2 and 3, the electronic unit 10 is configured so as to control through the moving device 9, the movement of the image acquisition device 8 relative to the automotive lighting unit 2, along a predetermined moving path J. The moving path J can be associated with a sequential acquisition of a plurality of cells ICi, which represent the respective surface portions Ki making up the emitting surface 7 (Figures 8 and 9).

The invention is not limited to the movement of the image acquisition device 8 relative to automotive lighting unit 2 (which, for example, stands still) along the predetermined moving path J, but it can also alternatively entail the control of the movement of the automotive lighting unit 2 relative to the image acquisition device 8 (which, for example, stands still) along the moving path J.

Hence, as shown in the schematic example of Figures 2 and 8, the emitting surface 7 is divided into a plurality of surface portions Ki, which are represented in the form of images by the respective cells ICi. The cells ICi determined by the image acquisition device 8, at the end of the movement along the moving path J, form a mosaic of images, which, when put together/joined (Figure 9), form an overall image IT representing the emitting surface 7.

In other words, the overall image IT represents the composition (joining/mosaic) of the cells ICi. Therefore, the sum of the second areas AR2 of the cells ICi corresponds to the first area AR1 of the emitting surface 7. Hence, the moving path J is defined in such a way that the image acquisition device 8 scans the entire emitting surface 7 according to a predetermined sequential acquisition order of the cells ICi, which preserves the conditions of definition of the cells ICi, according to which the pixels $P_{jk}(i)$ contained in the cells ICi have acquisition angles $\delta jk$ that are smaller than the predetermined angular threshold $\alpha$.

Preferably, the movement of the image acquisition device 8 along the moving path J can be carried out on one or more axes, for example three axes X, Y and Z. Preferably, the movement of the image acquisition device 8 along the moving path J can be discontinuous, namely it can entail the temporary interruption of the movement of the image acquisition device 8 in order to carry out the acquisition of the image IMi.

With reference to Figures 2 and 3, in this embodiment, the movement of the image acquisition device 8 along the moving path J can be controlled so that the length Si covered by the image acquisition device 8 between the acquisition of an image IMi and the acquisition of an immediately following image Imi+1 depends on the predetermined angular threshold $\alpha$. Conveniently, the length Si can approximately correspond to a dimension Wi of the portion Ki of emitting surface corresponding to the cell ICi. The dimension Wi depends on the predetermined angular threshold $\alpha$. Obviously, the images IMi can comprise common pixels $P_{jk}(i)$, whereas each cell ICi is sized so as to preferably comprise pixels $P_{jk}(i)$ that are not comprised in an adjacent cell ICi+1. In this case, the electronic unit 10 can be configured so as to eliminate the overlap of the pixels $P_{jk}(i)$ in the acquired images IMi.

With reference to the embodiment shown in Figure 1, the electronic unit 10 can further be configured to as to control the image acquisition device 8 during its movement along the path J so that the image acquisition device 8 selectively captures the images IMi containing the cells ICi and determines the cells ICi contained in the acquired images IMi. In other words, during the movement, the electronic unit 10 can receive the cells ICi from the image acquisition device 8 and processes them in order to determine, for each cell ICi, for example, a matrix of values containing the luminance $L(P_{jk}(i))$ of the pixels $P_{jk}(i)$ of the cell ICi itself.

Obviously, according to a variant, the electronic unit 10 can receive from the image acquisition device 8 matrices of values containing the luminance $L(P_{jk}(i))$ of the pixels $P_{jk}(i)$ of the acquired/captured cells ICi.

According to a preferred embodiment, the electronic unit 10 can further be configured so as to put the acquired cells ICi together according to the relative positions, so as to obtain the overall image IT.

According to a preferred embodiment, the electronic unit 10 can further be configured so as to process the pixels $P_{jk}(i)$ of the overall image IT obtained from the cells ICi in order to determine the luminance $L(P_{jk}(i))$ of the pixels $P_{jk}(i)$ of the overall image IT itself.

According to a preferred embodiment, in which the image acquisition device 8 comprises a digital camera 8a (in black and white or with colours), the electronic unit 10 can be configured so as to receive and process the signals (in greyscale or with colours) provided by the camera 8a, by means of an adjustment system, and carries out a luminance conversion and linearization ($Cd/m^2$) of the optical signal acquired from each pixel, taking into account the exposure parameters and the optical properties of the vision system of the camera 8a. Obviously, in this case, the output of the digital camera 8a can comprise a matrix of values corresponding to the light signal transduced from each one of its pixels, whose value is digital and can conveniently have a 8 or 16bit resolution.

Obviously, according to a variant in which the image acquisition device 8 provides the electronic unit 10 with matrices of values containing the luminance $L(P_{jk}(i))$ of the pixels $P_{jk}(i)$ of the acquired/captured cells ICi, the electronic unit 10 can put together the matrices of the cells ICi in order to obtain the luminance $L(P_{jk}(i))$ of the pixels $P_{jk}(i)$ of the overall image IT.

The electronic unit 10 is further configured so as to carry out a photometric control of the emitting surface 7 based on the luminance $L(P_{jk}(i))$ of the pixels $P_{jk}(i)$ of the overall image IT representing the emitting surface 7.

According to a preferred embodiment, the photometric control implemented by the electronic unit 10 entails determining whether the emitting surface 7 has a homogeneous luminance.

According to a possible embodiment, the electronic unit 10 establishes that the emitting surface 7 has a homogeneous luminance when the luminance $L(P_{jk}(i))$ of the pixels $P_{jk}(i)$ of the cells ICi making up the overall image IT fulfils a first predetermined condition.

According to a possible embodiment, the electronic unit 10 establishes that the luminance $L(P_{jk}(i))$ of the pixels $P_{jk}(i)$ of the cells ICi making up the overall image IT fulfils the first predetermined condition when the luminance $L(P_{jk}(i))$ of the pixels $P_{jk}(i)$ is comprised in a predetermined luminance range.

Vice versa, the electronic unit 10 establishes that the emitting surface 7 has a non-homogeneous luminance when the luminance $L(P_{jk}(i))$ of the pixels $P_{jk}(i)$ of the cells ICi making up the overall image IT does not fulfil the first predetermined condition.

According to a possible embodiment, the electronic unit 10 establishes that the luminance $L(P_{jk}(i))$ of the pixels $P_{jk}(i)$ of the cells ICi making up the overall image IT does not fulfil the first predetermined condition when the luminance $L(P_{jk}(i))$ of said pixels $P_{jk}(i)$ is not comprised in a predetermined luminance range.

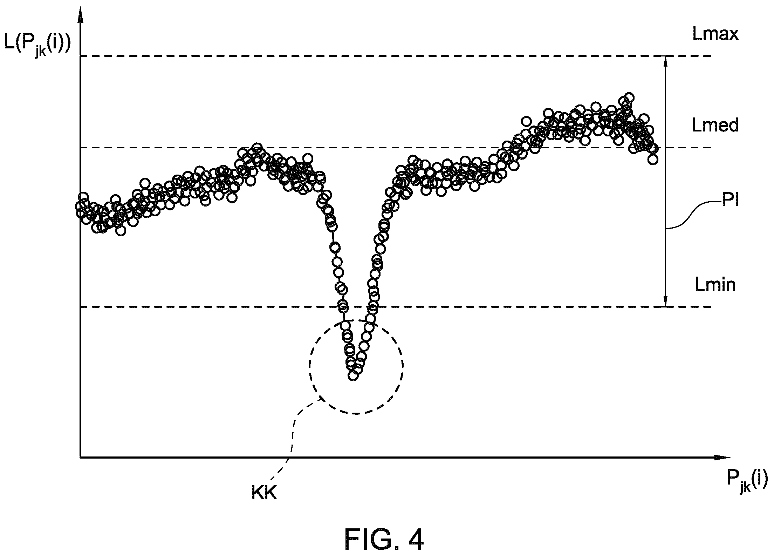

Figure 4 shows a diagram of an example obtained by the Applicant during lab tests. The diagram shows: on the abscissa, the pixels $P_{jk}(i)$ of the overall image IT obtained from the cells ICi; on the ordinate, the luminance $L(P_{jk}(i))$ of the pixels $P_{jk}(i)$ of the overall image IT. The diagram further shows a luminance range PI ranging from a minimum luminance value Lmin to a maximum luminance value Lmax. In the diagram, the broken line circle KK contains some luminance values $L(P_{jk}(i))$ of pixels $P_{jk}(i)$ of the overall image IT, which are smaller than the minimum luminance value Lmin, namely are on the outside of the range PI. In the example shown in Figure 4, the system 1 detects that the emitting surface 7 has not a homogeneous luminance, since some luminance values $L(P_{jk}(i))$ of pixels $P_{jk}(i)$ of the overall image IT do not fulfil the first predetermined condition, as they are not comprised in the range PI.

A technical effect obtained by the system 1 is that of being able to control the luminance of the automotive lighting unit 2 even when the emitting surface 7 is large-sized and/or keeping the image acquisition device, which acquires images of the emitting surface 7, at a close distance from the automotive lighting unit 2.

It should be pointed out that the luminance of the automotive lighting unit 2 is defined as the measure of the light intensity emitted by the emitting surface 7 in a given predetermined direction, which, in the case of the camera, approximately corresponds to the one of its observation axis R1.

The pixels $P_{jk}$ present immediately around the optical axis R1 have small acquisition angles $\delta jk$ and, hence, can be associated with an observation direction that is approximately consistent with a correct luminance determining procedure. However, as the distance of the pixels of the image from the optical axis R1 of the camera 8a increases, there is an increase in the angle of acquisition thereof, which introduces an error.

The Applicant found out that, in order to be able to determine - with a certain level of reliability and precision - the luminance of the pixels making up the image of the large-sized emitting surface, it is possible to divide the emitting surface 7 into a mosaic of cells ICi, acquire the cells ICi in a selective manner, preferably by moving the image acquisition device, put the mosaic of cells ICi back together in order to obtain the overall image IT corresponding to the emitting surface 7 and determine the luminance $L(P_{jk}(i))$ of the pixels $P_{jk}(i)$ of the overall image IT.

Thanks to this, the system 1 can be used to control/determine the luminance of the light along a production line, even when the emitting surface is large-sized and the distance of the image acquisition device from the emitting surface is very small.

Therefore, a technical effect obtained with this application is that of being able to automate the control/determination of the light luminance along a production line. This effect allows manufacturers to solve both the technical problem caused by the subjective character of the analysis carried out by an operator and the technical problem of the merely partial control carried out by means of those systems that involve the lab analysis of the luminance of the lights through spot checks. Furthermore, laboratories do not set any limitation to the distance of the camera 8a from the automotive light 2, which, on the contrary, are present when the camera 8a is applied in a production line.

Preferably, the electronic unit 10 is further configured so as to provide information SW1 indicative of the homogeneous luminance of the emitting surface 7 and/or information SW2 indicative of the non-homogeneous luminance of the emitting surface 7.

Preferably, the electronic unit 10 is further configured so as to determine (recognize) the pixels $P_{jk}(i)$ of the cells ICi making up the image IT that do not fulfil the first predetermined condition. The electronic unit 10 can conveniently provide information SW3 indicative of the surface portions Ki of the emitting surface 7 with a non-homogeneous luminance, namely containing the pixels $P_{jk}(i)$ that do not fulfil the first predetermined condition.

The technical effect is that of being able to determine, in a detailed manner, the parts/portions (even very small ones) of the automotive lighting unit 2 that could have defects. In other words, the technical effect is that of providing, for each automotive lighting unit 2, indications that allow manufacturers to directly and precisely detect possible defects affecting the latter.

Obviously, according to a variant, the electronic unit 10 can be configured to determine a luminance value indicative of the overall luminance of the emitting surface 7 based on the luminance $L(P_{jk}(i))$ of the pixels $P_{jk}(i)$ of

the cells ICi making up the image IT, namely based on the luminance $L(P_{jk}(i))$ of the pixels $P_{jk}(i)$ of the image IT.

According to this variant, the electronic unit 10 can determine the luminance homogeneity condition based on the luminance value. Preferably, according to this variant, the luminance value of the emitting surface 7 could correspond to a mean value calculated based on the (arithmetic) mean of the luminance values $L(P_{jk}(i))$ of the pixels $P_{jk}(i)$ present in the overall image IT.

In this case, the electronic unit 10 can establish that the luminance $L(P_{jk}(i))$ of the pixels $P_{jk}(i)$ of the cells ICi making up the overall image IT fulfils the first predetermined condition when the aforesaid luminance value of the emitting surface 7 is greater than or equal to a predetermined homogeneous luminance threshold. In this case, the electronic unit 10 establishes that the emitting surface 7 has a homogeneous luminance.

Vice versa, the electronic unit 10 can establish that the luminance $L(P_{jk}(i))$ of the pixels $P_{jk}(i)$ of the cells ICi making up the overall image IT does not fulfil the first predetermined condition when the aforesaid luminance value of the emitting surface 7 is smaller than the predetermined homogeneous luminance threshold. In this case, the electronic unit 10 establishes that the emitting surface 7 has a non-homogeneous luminance.

According to a preferred embodiment, the electronic unit 10 can conveniently be configured so as to determine a defective state of a automotive lighting unit 2 when it detects that the emitting surface 7 has a non-homogeneous luminance.

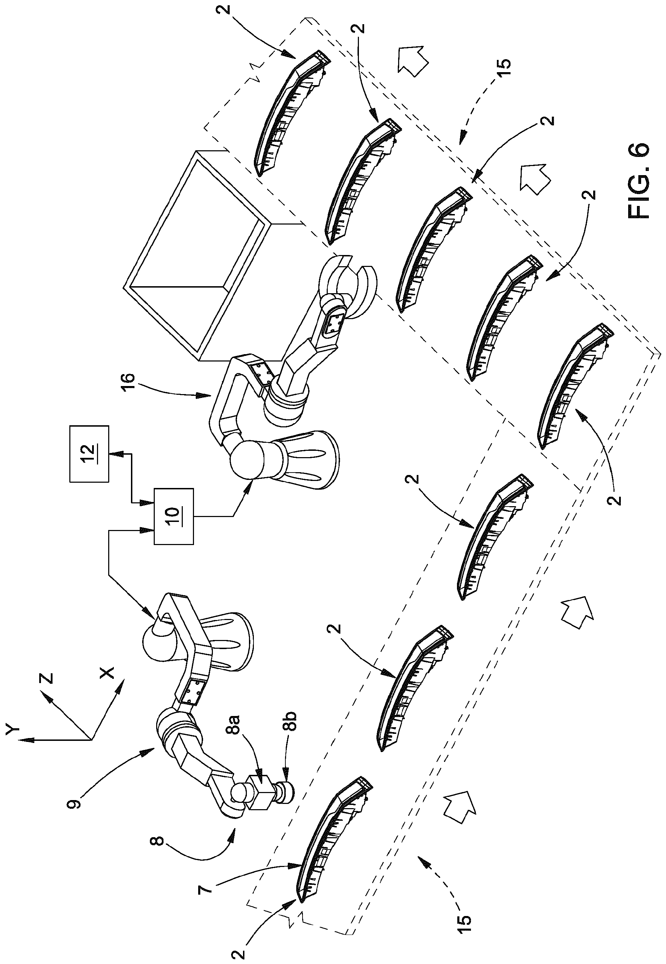

With reference to Figure 6, the system 1 can comprise a moving system 15 comprising, for example, a moving line (or line segment) provided with at least one conveyor, which is designed to move the automotive lighting units 2 along a predetermined moving path between an input and an output. The system 1 can further comprise a removal station 16, which is provided, for example, with a robotic arm. The robotic arm can be provided with a pick-up member, which is designed to remove, on command and in a selective manner, one or more automotive lighting units 2 present in/loaded onto the moving system 15. The electronic unit 10 can be configured to control the removal station 16 so as to selectively remove from the moving system 15 those automotive lighting units 2 for which a defective state and/or a non-homogeneous luminance were detected during the luminance/homogeneity control.

The technical effect is that of separating the automotive lighting units 2 having a non-homogeneous luminance - and, hence, considered defective - from the line in a completely automatic manner.

With reference to Figures 1 and 6, the system 1 can preferably comprise a user interface device 12, which is designed to communicate the first information SW1 and/or the second information SW2 and/or the third information SW3 to users.

Conveniently, the electronic unit 10 can further be configured so as to carry out a photometric control based on the determination of the light intensity ILL of the emitting surface 7.

The electronic unit 10 can further be configured so as to determine the light intensity ILL of the emitting surface 7 of the automotive lighting unit 2 based on the luminance $L(P_{jk}(i))$ of the pixels $P_{jk}(i)$ of the overall image IT.

According to a possible embodiment, the overall light intensity ILL of the emitting surface 7 can be determined, for example, through the following integral function:

$$ILL = \int L(Pjk(i))$$

Wherein $L(P_{jk}(i))$ are the luminance values of the pixels $P_{jk}(i)$ of the i-th cell ICi.

In other words, the light intensity ILL of the emitting surface 7 is calculated by integrating the luminance values $L(P_{jk}(i))$ of the pixels $P_{jk}(i)$ of the cells ICi making up the overall image IT representing the emitting surface 7.

Alternatively and/or in addition, the overall light intensity ILL of the emitting surface 7 can be determined in other ways, for example through the following summation function:

$$ILL = \sum_{i=1}^{i=n} L(Pjk(i))$$

Wherein i is the index identifying the cells ICi, whereas j and k are the indexes of the pixels $P_{jk}(i)$ present in the relative cell ICi.

Conveniently, the electronic unit 10 can further be configured so as to determine whether the light intensity ILL of the emitting surface 7 fulfils or, vice versa, does not fulfil a second predetermined condition. The second predetermined condition can be fulfilled when the light intensity ILL is greater than or equal to a predetermined light intensity threshold. Vice versa, the second predetermined condition cannot be fulfilled when the light intensity ILL is smaller than the predetermined light intensity threshold.

Conveniently, the electronic unit 10 can further be configured so as to determine a non-compliance state of the automotive lighting unit 2 when the light intensity ILL does not fulfil a second predetermined condition.

Conveniently, the electronic unit 10 can further be configured to control the removal station 16 so as to selectively remove the automotive lighting unit 2 from the moving system 15 when it has a light intensity ILL that does not fulfil the second predetermined condition, namely is in a non-compliance state.

The technical effect is that of being able to automatically check whether the automotive lighting unit 2 works correctly directly on the production line. In other words, the technical effect is that of carrying out an automatic control along the production line in order to check for the correctness of the light intensity of the automotive lighting unit 2, so as to detect automotive lighting units 2 that feature a lack of compliance.

Conveniently, the electronic unit 10 can further be configured to provide information SW4 indicative of the light intensity ILL of the emitting surface 7 of the automotive light 2. The information SW4 can be supplied to the user by means of the user interface device 12.

Conveniently, the electronic unit 10 can further be configured to provide information SW5 indicative of the fact that the light intensity ILL of a automotive lighting unit 2 fulfils or does not fulfil the second predetermined condition. The information SW5 can be supplied to the user by means of the user interface device 12.

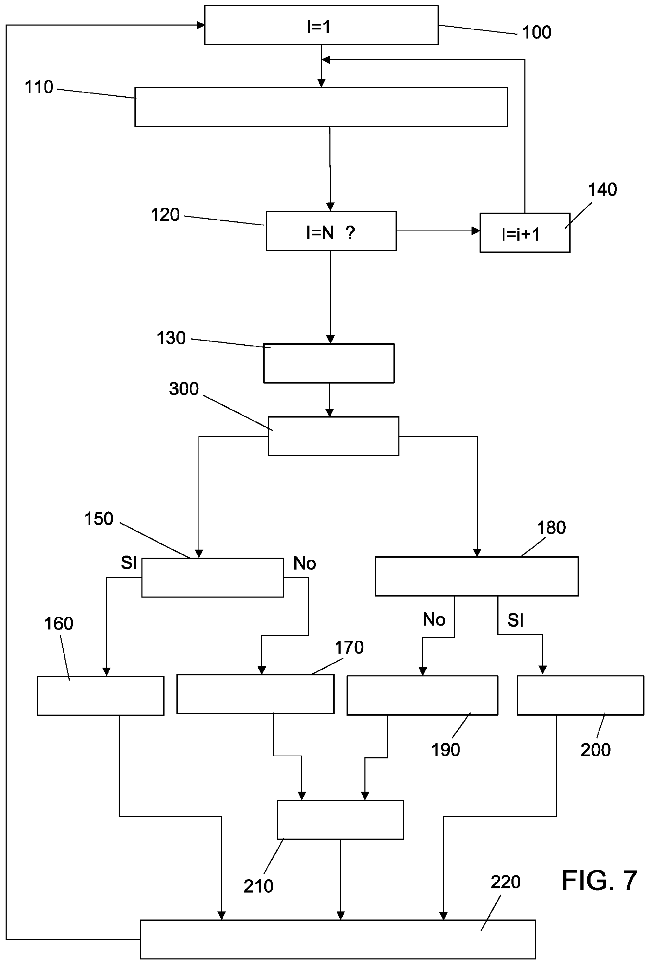

Figure 7 describes the steps of the method for the photometric control of the emitting surface 7, according to a possible embodiment in which the camera 8a acquires and produces, as an output, the cells ICi.

In order to increase the clarity of the explanation, the method will be applied to the analysis of one single automotive lighting unit 2. However, the operations described below can similarly be repeated for a plurality of automotive lighting units 2. During the analysis the automotive lighting units 2 can be moved by the moving system 15 in a given direction through the removal station 16.

The method can comprise, for example, the steps of analysing an index i=1 (block 100) concerning the acquisition of the image IMi (i=1) containing the cell ICi (for example i=1), moving the image acquisition device 8 relative to the automotive lighting unit 2 in the position associated with the image IMi and with the relative cell ICi, and selectively acquiring/capturing the image IMi when the image acquisition device 8 has reached the position for the acquisition of the image IMi and of the cell ICi (block 110). During this step, the image acquisition device 8 can produce, as an output, the captured cell ICi in digital form.

The method further comprises the step of checking whether the index i corresponds to the index N associated with the last cell ICi to be acquired along the path (Block 120) .

If not, namely if "i" does not correspond to N, the method can, for example, increase the index i by a unit and implement again the operations of blocks 110-120 in order to selectively acquire the following cells ICi until the entire emitting surface 7 is completely scanned. In other words, the aforesaid operations can be repeated so as to allow the system 1 to determine all the cells ICi making up/forming the overall image IT, which are defined based on the division of the emitting surface 7 according to the predetermined angular threshold $\alpha$.

If yes, namely if "i" corresponds to N, the method determines that the acquisition (scanning) of the cells ICi has been completed.

The method determines the overall image IT based on the captured cells ICi (block 130). In this step, the cells ICi can be put together/joined based on their acquisition sequence and/or on the movement transmitted to the image acquisition device by the moving device 9.

The method determines the luminance $L(P_{jk}(i))$ of the pixels $P_{jk}(i)$ of the overall image IT corresponding to the emitting surface 7 (block 300).

Preferably, following the determination of the luminance $L(P_{jk}(i))$ of the pixels $P_{jk}(i)$ of all the cells ICi making up the image IT, the method can determine (check) whether the luminance $L(P_{jk}(i))$ fulfils the first predetermined condition (Block 150). If the first predetermined condition is fulfilled (YES output in block 150), the method establishes that the emitting surface 7 has a homogeneous luminance (block 160). If, on the contrary, the first predetermined condition is not fulfilled (No output in block 150), the method establishes that the emitting surface 7 has not a homogeneous luminance (block 170). In this case, namely when the method establishes that the emitting surface 7 has a non-homogeneous luminance, the method can determine the defective state of the automotive lighting unit 2.

Preferably, the method can further comprise the step of determining the light intensity ILL of the emitting surface 7 based on the luminance $L(P_{jk}(i))$ of the pixels $P_{jk}(i)$ of the cells ICi making up the overall image IT (block 180).

For example, the method can check whether the light intensity ILL of the emitting surface 7 fulfils the second predetermined condition, namely it checks whether the light intensity ILL is greater than or equal to a predetermined light intensity threshold.

If yes (YES output in block 180), namely if the light intensity ILL of the emitting surface 7 fulfils the second predetermined condition, the method detects that the automotive lighting unit 2 is compliant (block 200). If no (NO output in block 180), namely if the light intensity ILL of the emitting surface 7 does not fulfil the second predetermined condition, the method establishes that the automotive lighting unit 2 is in the non-compliance state (block 190).

The method can further comprise the step of controlling the removal device 16 so as to remove the automotive lighting unit 2 from the moving line (block 210) when the defective state (block 170) and/or the non-compliance state (block 190) are detected.

Following the operations carried out in blocks 160, 210, 200, the method can wait for a following automotive lighting unit 2 (block 220) and automatically carry out the operations described above (blocks 100 to 220). The advantages of the system described above are the following.

The determination of the luminance can also be carried out with the camera at a small distance from the emitting surface. Furthermore, it is possible to determine the luminance of lighting surfaces of large-sized lights, ensuring a predetermined vision or observation angle.

The determination of luminance homogeneity or non-homogeneity conditions allows manufacturers to automate the process of separation of defective lights present in a line. The determination of the light intensity can also be carried out on large-sized lighting surfaces and allows manufacturers to automatically remove non-compliant lights from the production line.

Finally, system and the method described herein can be subjected to changes and variants, which do not go beyond the scope of protection set forth in the appended claims.

## Claims

1. A system for the photometric control of an emitting surface (7) of an automotive lighting unit (2), said system is **characterized in that** it comprises:

   an image acquisition device (8),
   an electronic unit (10) configured so as to:

   - selectively capture, by means of said image acquisition device (8), a plurality of digital image cells (ICi) comprising respective pixels (P$_{jk}$(i)),

   wherein said captured digital cells (ICi) are sized so that the pixels (P$_{jk}$(i)) contained in them have an acquisition angle ($\delta$jk) that is smaller than a predetermined angular threshold ($\alpha$) measured relative a vision axis (R1) of said image acquisition device (8), and
   wherein said digital cells (ICi) are sized so that their composition/joining forms an overall image (IT) that represents said emitting surface (7),

   - determine said overall image (IT) based on the captured digital cells (ICi),
   - determine the light intensity of the emitting surface (7) based on the luminance of the pixels (L(P$_{jk}$(i))) of said overall image (IT).

2. The system according to claim 1, wherein said electronic unit (10) is further configured so as to determine the luminance of the pixels (L(P$_{jk}$(i)) of said overall image (IT) based on the luminance (L(P$_{jk}$(i))) of the pixels (Pjk(i)) of said captured digital cells (ICi).

3. The system according to claim 2, wherein said electronic unit (10) is further configured so as to process the pixels (Pjk(i)) of each captured digital cell (ICi) in order to determine the luminance (L(P$_{jk}$(i))) of said pixels (Pjk(i)).

4. The system according to claim 2, wherein said image acquisition device (8) is configured so as to provide said electronic unit (10) with the luminance of the pixels (Pjk(i)) of each captured digital cell (ICi).

5. The system according to claim 1, wherein said electronic unit (10) is configured so as to put together the overall image (IT) based on the joining/composition of said digital cells (ICi) and processes the pixels (P$_{jk}$(i)) of said overall image (IT) in order to determine the luminance (L(Pjk(i))) of the pixels (Pjk(i)) of said overall image (IT) .

6. The system machine according to any one of the preceding claims and comprising:

   a moving device (9), which is configured so as move the image acquisition device (8) and/or said automotive light (2) relative to one another, said electronic unit (10) is further configured to control said moving device (9) so as to selectively capture, during the movement, said digital cells (ICi) of said emitting surface (7) by means of said image acquisition device (8).

7. The system according to any one of the preceding claims wherein:

   said automotive lighting unit (2) comprises: at least one transparent or semitransparent portion (5) having a first area, at least one lighting device (6), which emits light in order to backlight said transparent or semitransparent portion (5) so as to form said emitting surface (7) on said first area,
   said image acquisition device (8) is configured so as to: capture a first image (Imi) of said emitting surface (7) containing a digital cell (ICi) corresponding to a relative surface portion (Ki) of said emitting surface (7) having a second area, which is smaller than the first area, and provide said cell (ICi),

   said electronic unit (10) is further configured so as to:

   moving, by means of the moving device (9), the image acquisition device (8) and/or said automotive lighting unit (2) relative to one another along a predetermined moving path (J) associated with the sequential acquisition of a plurality of digital cells (ICi), which represent respective surface portions (Ki) of said emitting surface (7), control the image acquisition device (8), during said movement along said predetermined moving path (J), so as to receive said captured digital cells (ICi) from the image acquisition device (8), determine the luminance (L(P$_{jk}$(i)) of the pixels (P$_{jk}$(i)) of the overall image (IT) based on the

luminance (L($P_{jk}(i)$) of the pixels ($P_{jk}(i)$) of the digital cells (ICi),
determine the light intensity (ILL) of the emitting surface (7) based on the luminance of the pixels L($P_{jk}(i)$) of the overall image (IT).

8. The system according to any one of the preceding claims, wherein said electronic unit (10) is further configured so as to determine a non-compliance state of the emitting surface (7) of said automotive lighting unit (2) based on said determined light intensity (ILL).

9. The system according to claim 8, wherein said electronic unit (10) is further configured so as to determine a non-compliance state of the emitting surface (7) of said automotive lighting unit (2) when said determined light intensity (ILL) does not fulfil a given condition with a predetermined luminosity threshold.

10. The system according to claim 8 or 9 and comprising removal means (16), which are designed to selectively remove a automotive lighting unit (2) from a line when its emitting surface (7) shows a non-compliance state.

11. The system according to any one of the preceding claims, wherein said image acquisition device (8) comprises a camera (8a) and a photopic filter (8b), which is optically coupled to said camera (8a).

12. The system according to any one of the preceding claims, wherein said electronic unit (10) is further configured so as to determine the light intensity (ILL) of said automotive lighting unit (2) by implementing an integral of the luminance values (L($P_{jk}(i)$) of the pixels ($P_{jk}(i)$) of the overall image (IT).

13. The system according to any one of the claims from 1 to 11, wherein said electronic unit (10) is further configured so as to determine the light intensity (ILL) of said automotive lighting unit (2) by implementing a summation of the luminance values (L($P_{jk}(i)$) of the pixels ($P_{jk}(i)$) of the overall image (IT).

14. A method to carry out the photometric control of an emitting surface (7) of an automotive lighting unit (2), said method being **characterized in that** it comprises:

- providing an image acquisition device (8),

- selectively capturing, by means of said image acquisition device (8), a plurality of digital image cells (ICi) comprising respective pixels ($P_{jk}(i)$),

wherein said captured digital cells (ICi) are sized so that the pixels ($P_{jk}(i)$) contained in them have an acquisition angle ($\delta jk$) that is smaller than a predetermined angular threshold ($\alpha$) measured relative a vision axis (R1) of said image acquisition device (8), and
wherein said digital cells (ICi) are sized so that their composition/joining forms an overall image (IT) that represents said emitting surface (7),

- determining said overall image (IT) based on the captured digital cells (ICi),
- determining the light intensity of said emitting surface (7) based on the luminance of the pixels (L($P_{jk}(i)$)) of said overall image (IT).

15. The method according to claim 12 and comprising:

providing a moving device (9), which is configured so as move the image acquisition device (8) and/or said automotive lighting unit (2) relative to one another,
controlling said moving device (9) so as to selectively capture, during the movement, said digital cells (ICi) of said emitting surface (7) by means of said image acquisition device.

FIG. 1

AR2;Ki

$P_{jk}(i)$

ICi

IMi

7;AR1

4

5

Ki

J

2

IMi

FIG. 2

FIG. 3

FIG. 4

FIG. 5

FIG. 6

EP 4 113 078 A1

FIG. 7

FIG. 8

FIG. 9

FIG. 12

FIG. 11

FIG. 10

Europäisches
Patentamt

European
Patent Office

Office européen
des brevets

# EUROPEAN SEARCH REPORT

Application Number

EP 21 18 2948

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CATTOEN M ET AL: "Compact System for Photometric Characterization of Automotive Headlamps", INSTRUMENTATION AND MEASUREMENT TECHNOLOGY CONFERENCE, 2005. IMTC 2005 . PROCEEDINGS OF THE IEEE OTTAWA, ON, CANADA 16-19 MAY 2005, PISCATAWAY, NJ, USA,IEEE, vol. 3, 16 May 2005 (2005-05-16), pages 1669-1674, XP010900735, DOI: 10.1109/IMTC.2005.1604453 ISBN: 978-0-7803-8879-6 * page 1669, right-hand column, paragraph 1 - page 1670, right-hand column, last paragraph * * figures 1,2,10,12 * ----- | 1-15 | INV. G01J1/04 G01J1/42 G01M11/02 |

|  |  |
|---|---|
|  | TECHNICAL FIELDS SEARCHED (IPC) |
|  | G01J G01M |

The present search report has been drawn up for all claims

| Place of search | Date of completion of the search | Examiner |
|---|---|---|
| Munich | 15 December 2021 | Jacquin, Jérôme |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)